# EUROPEAN PATENT APPLICATION

(11) **EP 1 492 321 A1**
(43) Date of publication of application: **29.12.2004**
(21) Application number: 04253710.0
(22) Date of filing: 21.06.2004
(51) Int. Cl.: H04M 17/00, H04M 15/00, H04L 12/14, G06F 17/60

(54) **System and method for extending billing services to applications on a carrier's network**

(30) Priority: 24.06.2003 US 602749
(71) Applicant: Openwave Systems Inc., Redwood City, CA 94063 (US)
(72) Inventor: Ear, Chenglim, Alameda, CA 94501 (US)
(74) Representative: Jackson, Richard Eric

(57) **Abstract**

The present invention provides a generic extension module, such as a billing extension module, that can be used to extend a carrier's application's support for real-time billing events. Billing events are triggered around billable operations in the carrier's application, such as the operation to accept a message that was submitted to a server or the operation to deliver a message. The start of an event is triggered before the operation is performed and the end of the event is triggered after the operation is performed. An application can trigger the same event for different operations. Each billing event has associated with it a billing record that has data about the operation and that can be used to charge for the operation that triggered the event. Events can also be linked together if charges are based on the execution of related operations.

## Description

### TECHNICAL FIELD

The present invention is directed generally to billing applications and, more particularly, to a generic extension module that supports both real-time and deferred billing events.

### BACKGROUND

With the development of the Multimedia Messaging Service (MMS), mobile messaging has evolved beyond the mobile-to-mobile text messages of the Short Message Serve (SMS) to more advanced messaging systems that allow subscribers to exchange more complex messages with a wider group of users. In addition to plain text, MMS messages may contain a combination of images, graphics, and audio and video clips. MMS can be used to send multimedia messages between wireless devices, such as mobile telephones, or between a wireless device and an e-mail account. Users can send pictures, photos, speech and audio from any wireless devices, including a mobile telephone, Personal Digital Assistant (PDA) or Personal Computer (PC).

As mobile messaging becomes more popular, service providers need the capability to bill for these messaging services in real-time. Service providers also need a system that allows them to select mobile messaging operations that should be billed and to select which party should be billed when these operations occur. Current messaging applications do not give services providers this flexibility.

### SUMMARY

The present invention is directed to a system and method that provides a generic extension module, called the Billing Extension Module, that can be used to extend a carrier's application's support for real-time billing events. Billing events are triggered around billable operations in the carrier's application, such as the operation to accept a message that was submitted to a server or the operation to deliver a message. The start of an event is triggered before the operation is performed and the end of the event is triggered after the operation is performed. An application can trigger the same event for different operations. Each billing event has associated with it a billing record that has data about the operation and that can be used to charge for the operation that triggered the event. Events can also be linked together if charges are based on the execution of related operations.

The Billing Extension Module provides the messaging application with an interface to a billing system and provides the billing system with the capability to receive real-time, near real-time, and/or deferred billing events from the application. The messaging application uses the Billing Extension Module to handle events. The Billing Extension Module allows a carrier to define what occurs at the beginning of an event and what occurs at the end of an event. The Billing Extension Module can be built once to support a billing system at a carrier site and then shared at that site with all other applications that support the Billing Extension Module.

The Billing Extension Module can be used where there is a separate charging system and a separate rating engine. The Billing Extension Module can be used where there is one server to handle both charging and rating. The Billing Extension Module can rate and reserve funds at the beginning of an event and then charge or rollback funds at the end of an event. The carrier also has the option to save event data in a local Charging Data Record (CDR) file. For example, this can be used for near real-time charging in the event that the billing system is unavailable due to failure or load. The local CDR file is processed as soon as possible. The Billing Extension Module can be used where there is no rating engine. Rating occurs inside the Billing Extension Module before funds are reserved.

The Billing Extension Module can be used where the billing server is not responsive enough for real-time billing. The Billing Extension Module saves event data in a local CDR file. The local CDR file is processed as soon as possible by an external billing process. If the application supports a mechanism to indicate that a user has run out of funds, this mechanism will be used by the billing process to stop future billable operations. When funds are replenished, then the switch is turned back on to authorize the user to perform billable operations until the next time the funds run low.

The local CDR files can be used by the post-paid component of a carrier's billing system. The CDR files can be periodically sent to a CDR archive where a Billing Manager will process them on a schedule that is configured by the carrier. The contents of the CDR files are application-specific and provided to the carrier as a billing specification. The application will allow the carrier to exclude certain data from the CDR file. The carrier will configure its billing manager to recognize the data in the CDR file.

The Billing Extension Module provides the following advantages. The Billing Extension Module provides a generic interface that can be used by any application. The Billing Extension Module handles both pre-paid and post-paid account. The Billing Extension Module is customizable after a new messaging application is released. The messaging application provides the Billing Extension Module with an Extension Module Framework API to minimize the amount of effort necessary to adapt it to a carrier's environment. The Billing Extension Module is adaptable to any back-end real-time server and any CDR encoding rule.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:

FIGURE 1 is a block diagram of one embodiment of the present invention; and

FIGURE 2 is a flowchart that illustrates one embodiment of the method of operation of the present invention.

### DETAILED DESCRIPTION

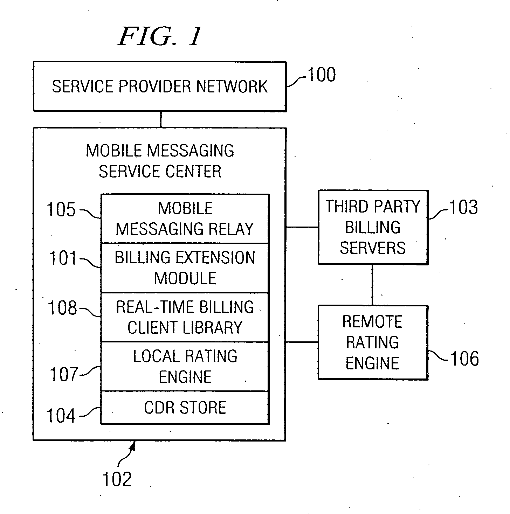

FIGURE 1 illustrates a system incorporating one embodiment of the present invention. The invention provides a mechanism for Multimedia Messaging Service (MMS) providers to configure which messaging operations should be charged to subscribers. For example, service provider 100 may select a predefined set of billable operations, such as sending a message or receiving a message, and the subscribers will be billed when those operations are preformed. Billing Extension Module (BEM) 101 provides billing functionality to Mobile Messaging Service Center (MMSC) 102 in the service provider's network. BEM 101 also provides a point of integration with third-party billing systems. Service provider 101 uses MMSC 102 to process and route MMS messages for subscribers.

Billable operations are associated with billing triggers that can be configured as either active or inactive. When a subscriber's message flow reaches a billable operation that has been associated with an active trigger, subscriber transaction data is forwarded to BEM 101, which performs either prepaid or postpaid billing processing. BEM 101 encodes the data into Simple Object Access Protocol (SOAP) format and sends it to third-party billing servers 103. Alternatively, BEM 101 may encode the data in the Abstract Syntax Notation 1 (ASN.1) BER format and generate local CDR files.

The present invention allows system integrators to customize billing logic before and after a billable operation is performed and to customize system interfaces and CDR formats. The billing logic that is used to handle prepaid and postpaid accounts may be customized to implement a local rating scheme or to meet site-specific billing requirements. The interface for communicating with the real-time billing system can be customized to work with one or more billing servers that manage prepaid accounts. The CDR format can be customized to be used with billing servers that manage postpaid accounts.

In a preferred embodiment, BEM 101 is a shared library that supplies MMSC 102 with a default implementation that provides complete support for real-time, deferred or hot-billing schemes. The shared library can be customized to provide site-specific billing scheme. BEM 101 provides support for billing logic, including preoperation processing, such as rating and fund authorization, and postoperation processing, such as submitting charges to third-party billing systems 103 or logging CDRs to a local memory 104. The BEM library provides support for changing the format or encoding used to generate billing records or to add header and trailer data to CDR files. In the preferred embodiment, BEM 101 uses the Extension Module Framework (EMF) to encode billing record data into the ASN.1 BER format. The BEM library is used to communicate with the real-time billing server by formatting billing data using SOAP/XML and sending the data to third-party billing systems 103.

The Extension Module Framework is an Application Program Interface (API) containing a collection of utility functions that can be used by MMSC 102. The API provides functions for ASN.1 BER and Base64 encoding and decoding, writing CDRs to files 104, logging information, retrieving configuration key and error text values, posting HTTP requests, and other useful utilities.

The messaging flow in MMSC 102 contains many potentially billable operations, such as submitting a message or delivering a message. Each operations corresponds to a billing trigger that generates charges when the operation occurs. When subscriber message flow reaches an active billing trigger, it generates a billing event that rates and authorizes the operation for real-time billing. The billing event is handled by the BEM, which charges for the operation by generating a CDR for deferred billing or by posting charges to a billing system for real-time billing. The CDR and posted charges contain event-specific data.

The following MMSC billing events are examples of types of interface-independent message processing: DRNotification, DRSubmission, MMDelivery, MMNotification, and MMSubmission. DRNotification is generated when MMS relay 105 sends a delivery report to the message originator indicating whether a message was successfully delivered. DRSubmission is generated when a subscriber authorizes a delivery report in response to receiving a message. MMDelivery is generated when a subscriber retrieves a message or when a message is delivered to a remote system on behalf of the message originator. MMNotification is generated when the MMS relay sends a new message notification. MMSubmission is generated when a subscriber submits or forwards a message.

In one embodiment, the following default charges result from the billing events. The DRNotification event charges the recipient of the delivery report. The DRSubmission event charges the originator of the delivery report. The MMDelivery and MMNotification events charge the message recipient. The MMSubmission event charges the message originator. By default, a typical message flow charges the originator for submitting a message and charges the recipient for retrieval of a message. The system operator may link or group events and may modify the party charged for the events. When events are linked, it is possible to have one charge apply to the successful occurrence of all the events.

CDRs contain event-specific information, such as message type, message class, and originator and recipient addresses. The billing system uses this information to charge for billable operations. BEM 101 generates a CDR for each billable event, and MMSC 102 stores CDR data in ASN.1 BER format. BEM 101 can be modified to store CDRs in other formats. MMSC 102 supports two types of CDRs, which are defined by the 3GPP TS 32.235 Version 4.0 technical specification, which is available from the Third Generation Partnership Project. MMSO-CDR is a CDR that contains standard fields that hold data for billing events associated with message originators. MMSR-CDR is a CDR that contains standard fields that hold data for billing events associated with message recipients. MMSC 102 extends both types of CDR using the recordExtensions field. This field is used to define event-specific fields that can be used by the billing system when generating charges. By default, CDR files contain three types of information: header information, individual CDR data, trailer information. BEM 101 can be customized to modify or exclude the default header and trailer information.

BEM 101 uses two different types of files to store CDRs, real-time CDR files and deferred CDR files. Real-time CDR files contain CDRs of transactions that MMSC 102 cannot process with real-time billing because, for example, billing servers 103 are not available. These files are used for hot billing, which is a real-time billing backup scheme in which the transactions are reconciled as soon as billing systems 103 become available. Deferred CDR files contain CDRs of transactions that do not require immediate reconciliation. BEM 101 logs to local CDR files 104. The billing system must be able to access the CDR files in order to reconcile charges. To ensure that a remote billing system can access CDR files, a script must be written to periodically move the local CDR files to remote billing systems 103, the local directory 104 containing the CDR files must be made accessible to billing systems 103, or BEM 101 need to be customized to send the billing information to an application on the remote billing server that logs data to CDRs on billing serves 103.

BEM 101 provides functionality to support the following types of billing schemes: deferred billing, real-time billing, hot billing. Using deferred billing, at the time a billing event occurs, BEM 101 automatically authorizes the transaction and logs a CDR that contains the information necessary for billing systems 103 to reconcile the charges at a later time. Using real-time billing, at the time a billing event occurs, BEM 101 interacts directly with third-party billing systems 103 to rate and authorize the event before MMSC 102 performs the billable operation. BEM 101 and third-party billing systems 103 determine the amount to charge for the event and then verify that the subscriber has a sufficient account balance. If the subscriber's account has insufficient funds, billing systems 103 deny the transaction and MMSC 102 sends an error message to the subscriber. If the transaction is authorized, billing systems 103 charge the account after MMSC 102 performs the billable operation. A CDR may be logged by MMSC 102 for tracking purposes. The hot billing scheme is a backup to real-time billing. If BEM 101 is not able to contact the billing system at the time an event occurs, rather than denying the transaction, BEM 101 automatically authorizes the transaction and logs a CDR to the real-time CDR file.

MMSC 102 uses the billing schemes to support both prepaid and postpaid billing plans. Typically, MMSC 102 handles prepaid subscriber accounts using real-time billing and provides hot billing as a backup. Postpaid subscriber accounts are handled with deferred billing. The deferred and hot billing schemes may require a script to transfer the CDR files from CDR store 104 to remote deferred billing servers 103 which reconcile the CDRs with billing systems 103.

Rating engines are used to determine the amount to charge for billable operations. Rating engines are used by BEM 101 for processing billing events in real-time and by hot billing applications while processing CDRs. At least two types of rating engines may be used with the present invention: remote rating engine 106 and local rating engine 107. Remote rating engine 106 is used for both real-time and deferred event processing. Local rating engine 107 may use a custom file that holds event rates and be local to BEM 101.

Real-time billing requires that MMS relay 105, BEM 101, real-time billing client library 108, and billing servers 103 work together. MMS relay 105 collects billing-related information from messages and creates billing records that are passed to BEM 101 for processing. BEM 101 converts billing data into C data structures and forwards the data to real-time billing client library 108. Real-time billing client library 108 converts billing data from BEM 101 into SOAP-formatted requests that are sent over HTTP to real-time billing servers 103. Billing servers 103 process requests from billing client library 108, such as rate generation or debit processing, and returns responses back in SOAP format. Billing servers 103 are site-specific and is not part of MMSC 102. Different third-party billing servers typically handle real-time and deferred billing events.

In a preferred embodiment, BEM 101 supplies generic implementations that provide complete support for real-time, deferred and hot billing schemes. However, if these default implementations do not meet the site-specific requirements for a service provider carrier, custom versions of BEM 101 can be implemented by customizing the BEM functions to operate with the available billing system.

The billing extension module is used to handle events in an application and other administrative functions associated with the handling of events, such as setting up and cleaning up billing related activity and managing local CDR files. The billing extension module runs embedded in a host application and exposes a programming interface to the application. In a preferred embodiment, the billing extension module interface allows the application to delegate billing activity to the billing extension module at the following times:
- when initializing structures for making billing extension module calls;
- when cleaning up structures for making billing extension module calls;
- after the server starts;
- before the server stops;
- after a local CDR file is opened;
- before a local CDR file is closed;
- after a local CDR file is closed;
- at the beginning of an event; and
- at the end of an event.
The billing extension module and the application may be modified to delegate billing activity at other times as desired by the service provider.

To allow the billing extension module to be used by any application, it supports a C interface that is not application dependent. The C interface consists of generic event functions and generic structures for passing data to the billing extension module.

A local CDR file is a file to which the application writes billing records. There are two CDR files that the application makes available to the billing extension module, one for near real-time processing and one for deferred processing. The CDR file for near real-time processing is processed quickly, and it contains events that were not processed because the real-time billing server was unresponsive. The CDR file for deferred processing is processed daily. It contains logs of pre-paid events that were processed in real-time and logs of postpaid events that still need to be processed.

The billing extension module has the opportunity to intervene after a CDR file is created and before it is closed. This allows it to put in a header and trailer in the file. After the CDR file is opened, the billing extension module writes a header to the file before any records can be added to the file. Before the file is closed, the billing extension module writes a trailer to the file. The contents of the headers and trailers are provided by the application that call these routines.

The billing extension module will also have the opportunity to pre-process a CDR file after it is closed. At this point, the CDR file can be renamed or moved to a different location. Additional control files can also be created and counters can be updated. By default, nothing is done by the billing extension module for this hook.

The application generates billing events when certain operations occur. We refer to these operations as billable operations. The application passes the billing record or CDR to the billing extension module. For prepaid accounts, the billing extension module determines the cost of the operation that triggered the event and determine if the user has enough funds to cover the cost. The billing extension module also checks if a cost is available. For users with postpaid accounts, authorization will always be granted. For users with prepaid accounts, authorization will be granted based on the availability of funds to cover the operation that triggered the event. If authorization is granted, a success is returned to the application and the application will perform the operation.

For prepaid accounts, the billing extension module will charge the account or rollback funds that were reserved earlier. If the remote billing server is not available, the billing extension module will log the event for processing by another process that will wait for the billing server to recover. The billing routine will block until all the necessary information can be returned to the application.

Events will occur for both prepaid billing accounts and postpaid billing accounts. The account type is passed to the billing extension module along with the other event data at the start and end of an event. The event data is the same whether the user is a prepaid customer or a postpaid customer. Even though the event data is passed to the billing extension module at both the start and end of an event, these data are not always used. Whether the data is used depends on how the billing extension module was configured to handle the event. The billing extension module can handle events immediately or save the billing data for handling later. By default, events for pre-paid accounts are handled immediately and events for post-paid accounts are saved for later handling.

Events for pre-paid accounts are handled in real-time. This means that requests are sent to the billing system as the event is being handled. At the start of an event or the start of a group of events, the transaction is rated based on the available event data and funds are reserved to cover the cost of the transaction. If there are not enough funds to cover the cost of the transaction, then that information is returned to the application. At the end of an event or the end of a group of events, the user is charged if there was no error during the event. If there were an error and funds were reserved, then those funds will be released. After the pre-paid event is successfully processed, a CDR is logged in the deferred CDR file used for post-paid CDRs. This allows the prepaid events to be tracked. When the deferred CDRs are processed, the pre-paid CDRs should not lead to a charge.

By default, pre-paid events are handled in real-time and near real-time and post-paid events are logged for later handling. Unknown events are treated as post-paid events. Events for post-paid accounts are not handled immediately. Instead, the billing extension module returns success immediately at the beginning of an event and the billing record is saved in the deferred CDR file at the end of an event. By default, the billing extension module only writes event data at the end of an event, but this can be customized as described in the next section.

The billing extension module does not directly handle the events. It passes event data to a billing server, which it expects to handle the event for both rating and charging. In the event that the billing server is not available, the billing extension module will default to near real-time handling of the events. The events are logged into the real-time CDR file where it can be processed by another process that is to be built by a system integrator. This allows pre-paid events to be handled out of line with the message flow.

The billing extension module uses the billing interface defined for a default real-time billing server. The billing interface includes calls to open and close a billing session. For a session, the billing interface supports calls to rate, reserve an amount, and debit an amount. The protocol used to communicate with the real-time billing server is SOAP over HTTP.

To allow the billing extension module to be customizable after an application is released, the module is implemented as a Sun Solaris shared object. This will allow the module to be modified and re-compiled without having to re-compile the application that uses it. This also allows many billing extension modules to be implemented, each supporting a different billing system. An application can easily be customized to work with a billing system by selecting and configuring the billing extension module that works with that system and if there isn't one available, a new billing extension module can be built for that system. Old versions of an application can be upgraded to work with a new billing system by upgrading the billing extension module.

A customized billing extension module may require custom configuration data. The Extension Module Framework API is specified to include a routine for accessing configuration settings that are added to the host application. This can include any arbitrary setting added for the purpose of configuring the billing extension module.

The billing extension module uses a billing client library to communicate with a remote billing server to do real-time billing. The client library will use SOAP over HTTP to communicate with the real-time billing server. If the service provider has an on-site billing server that can understand the protocol used by the default client library, then there is no need to choose a different billing client library. If not, the service provider has the option to either modify its billing server, purchase a real-time billing server, or choose a different billing client library for the billing extension module to use. This client library would be used to communicate with the carrier's real-time billing server. It is possible that this client will use a different protocol, such as CORBA, instead of SOAP over HTTP. The billing client library exposes a C API that is used to execute real-time billing routines to do such things as reserve funds or debit funds. The time when these routines are called depends on the billing logic that a carrier chooses to implement in the billing extension module.

The following list of billable operations trigger billing events at the MMSC.
- Web MM Submission - message is submitted to MMSC by web browser;
- MM1 MM Submission - message is submitted to MMSC by handset;
- MM3 MM Submission - message is received by MMSC through e-mail
- MM4 MM Submission - message is received by MMSC through remote MMSC;
- MM7 MM Submission - message is received by MMSC through VAS;
- Auto MM Forward - message is diverted to another mailbox;
- MM1 MM Notification - notification is sent to handset;
- MM1 MM Notification Acknowledgement -notification is confirmed by handset;
- Web MM Retrieval - message is retrieved by web browser;
- Web MC Retrieval - content is retrieved by web browser,
- MM1 MM Retrieval - message is retrieved by handset;
- MM1 MM Retrieval Acknowledgement - retrieval is acknowledged by handset;
- MM3 MM Delivery - message is delivered as e-mail;
- MM4 MM Delivery - message is delivered to remote MMSC;
- MM4 MM Delivery Acknowledgement - message delivery is acknowledged by remote MMSC;
- MM7 MM Delivery - message is delivered to VASP gateway;
- MM7 MM Delivery Acknowledgement - message delivery is acknowledged by VASP gateway;
- Auto DR Submission - delivery report is automatically submitted by MMS Relay;
- MM1 DR Submission - handset allows delivery of delivery report;
- MM4 DR Submission - handset from remote MMSC requests delivery of delivery report;
- MM1 DR Notification - delivery report is sent to handset;
- MM4 DR Notification - delivery report is sent to remote MMSC; and
- MM7 DR Notification - delivery report is sent to VASP gateway.

Web MM Submission occurs when an MMSC receives an Multimedia Message (MM) from a web browser. This generates an MM Submission event. The billing record type is "MMSO-CDR". The message type is "MM-Message". The originator interface is "Web". The originator will be charged by default. The event triggered by this operation starts before the MM is saved by the MMSC and ends after a confirmation is sent to the handset.

MM1 MM Submission occurs when an MMSC receives an MM from a user agent. It generates an MM Submission event. The billing record type is "MMSO-CDR". The message type is "MM-Message". The originator interface is MM1. The originator will be charged by default. The event triggered by this operation starts before the MM is saved by the MMSC and ends after a confirmation is sent to the handset.

MM3 MM Submission occurs when an MMSC receives an e-mail. It generates an MM Submission event. The billing record type is "MMSO-CDR". The message type is "MM-Message". The originator interface is MM3. By default, a CDR will be logged for this event. It is up to the service provider to decide how to charge the trusted e-mail service provider for this. The event triggered by this operation starts before the MM is saved by the MMSC and ends after it is saved for delivery.

MM4 MM Submission occurs when an MMSC receives an MM from another MMSC. It generates an MM Submission event. The billing record type is "MMSO-CDR". The message type is "MM-Message". The originator interface is MM4. By default, a CDR will be logged for this event. It is up to the service provider to decide how to charge the trusted service provider of the remote MMSC for this. The event triggered by this operation starts before the MM is saved by the MMSC and ends after it is saved for delivery and a success response is returned to the remote MMS Relay.

MM7 MM Submission occurs when an MM is submitted to an MMSC using the VASP gateway. It generates an MM Submission event. The billing record type is "MMSO-CDR". The message type is "MM-Message". The originator interface is MM7. By default, a CDR will be logged for this event. It is up to the service provider to decide how to charge the VAS service provider for this. The event triggered by this operation starts before the MM is saved by the MMSC and ends after it is saved for delivery and a success response is returned to the VAS gateway.

Auto MM Forward occurs when a message is received by a user that has configured MMs to be diverted to another mailbox. It generates an MM Submission event. The billing record type is "MMSO-CDR". The message type is "Message-MM". The originator interface is "Auto". This is because this process is initiated internally. By default, the originator is charged. The event triggered by this operation starts and ends after the MMSC has indication that an MM is to be diverted.

MM1 MM Notification occurs when a notification is sent to a handset. It generates a Notification event. The billing record type is "MMSR-CDR". The message type is "Notification". The recipient interface is MM1. By default, the recipient will be charged. This event will occur more than once if configured to charge only after confirmation is received from the user agent. The event is repeated one time when a confirmation is received from the user agent. If this event occurs more than once, a sequence number will be set to 1 for the first occurrence and increase sequentially for all subsequent occurrences. The charge indicator for the event will be set to "charge" only for the last occurrence. The event triggered by this operation starts before the notification is sent to the PPG and ends after the notification is successfully delivered to the PPG.

MM1 MM Notification Acknowledgement occurs when a user agent sends an acknowledgement indicating that a notification was successfully received. It generates an MM Notification event. The billing record type is "MMSR-CDR". The message type is "Notification". The recipient interface is MM1. By default, the recipient will be charged. The event will occur more than once if the "MM1 MM Notification" trigger is also activated. The event is repeated when this operation occurs. See MM1 MM Notification. If this event occurs more than once, the sequence number will be incremented by 1 for the event related to this operation. If not, the sequence number will be set to 0. The charge indicator will be set to "charge" if the operation was successful. The event triggered by this operation starts and ends after the MMSC receives an acknowledgement from the handset in the "Notify Response" PDU.

Web MM Retrieval occurs when an MM is retrieved using a web browser. It generates an MM Delivery event. The billing record type is "MMSR-CDR". The message type is "MM-Message". The recipient interface is "Web". By default, the recipient will be charged. If this event occurs more than once, the sequence number will be incremented by 1 for the event related to this operation. The event triggered by this operation starts before the MM is returned to the web server in the response and ends after the response is sent to the web server.

Web MC Retrieval occurs when content is retrieved using a web browser. It generates an MM Delivery event. The billing record type is "MMSR-CDR". The message type is "MM-Message". The recipient interface is "Web". By default, the recipient will be charged. If this event occurs more than once, the sequence number will be incremented by 1 for the event related to this operation. The event triggered by this operation starts before the MM is returned to the web server in the response and ends after the response is sent to the web server. The only difference between the billing record generated from this operation and the billing record generated from "Web MM Retrieval" is the name of the folder where the message originated.

MM1 MM Retrieval occurs when an MM is retrieved by a user agent. It generates an MM Delivery event. The billing record type is "MMSR-CDR". The message type is "MM-Message". The recipient interface is MM1. By default, the recipient will be charged. The event will occur more than once if the "MM1 Retrieval Acknowledgement" trigger is also activated. The event is repeated when the confirmation is received. See MM1 Retrieval Acknowledgement. If this event occurs more than once, the sequence number will be set to 1 and the charge indicator set to "nocharge" for the event related to this operation. If not, the sequence number will be set to 0 and the charge indicator will be set to "charge" if the operation was successful. The event triggered by this operation starts before the MM is delivered to the handset in the response and ends after it is delivered.

MM1 MM Retrieval Acknowledgement occurs when a user agent sends an acknowledgement indicating that a message was successfully retrieved. It generates an MM Delivery event. The billing record type is "MMSR-CDR". The message type is "MM-Message". The recipient interface is MM1. By default, the recipient will be charged. The event will occur more than once if the "MM1 Retrieval" trigger is also activated. The event is repeated when this operation occurs. See MM1 Retrieval. If this event occurs more than once, the sequence number will be incremented by 1 for the event related to this operation. If not, the sequence number will be set to 0. The charge indicator will be set to "charge" if the operation was successful. The event triggered by this operation starts and ends after the MMSC receives an acknowledgement from the handset either in the "Notify Response" or "Delivery Acknowledgement" PDUs.

MM3 MM Delivery occurs when an e-mail is delivered. It generates an MM Delivery event. The billing record type is "MMSR-CDR". The message type is "Message-MM". The recipient interface is MM3. By default, a CDR will be logged for this event. It is up to the service provider to decide how to charge the service provider of the trusted e-mail domain for this. The event triggered by this operation starts before the MM is delivered to an MTA and ends after it is successfully delivered to the MTA.

MM4 MM Delivery occurs when an MM is delivered to a remote MMSC. It generates an MM Delivery event. The billing record type is "MMSR-CDR". The message type is "Message-MM". The recipient interface is MM4. By default, a CDR will be logged for this event. It is up to the service provider to decide how to charge the service provider of the trusted MMSC for this. The event triggered by this operation starts before the MM is delivered to a remote MMS Relay and ends after it is successfully delivered to the remote MMS Relay.

MM4 MM Delivery Acknowledgement occurs when a remote MMSC sends an acknowledgement indicating that a message was successfully received. It generates an MM Delivery event. The billing record type is "MMSR-CDR". The message type is "Message-MM". The recipient interface is MM4. By default, a CDR will be logged for this event. It is up to the service provider to decide how to charge the service provider of the trusted MMSC for this. The event will occur more than once if the "MM4 MM Delivery" trigger is also activated. The event is repeated when this operation occurs. See MM4 MM Delivery. If this event occurs more than once, the sequence number will be incremented by 1 for the event related to this operation. If not, the sequence number will be set to 0. The charge indicator will be set to "charge" if the operation was successful. The event triggered by this operation starts and ends after the MMSC receives an acknowledgement from the remote MMSC.

MM7 MM Delivery occurs when an MM is delivered through the VAS Gateway. It generates an MM Delivery event. The billing record type is "MMSR-CDR". The message type is "Message-MM". The recipient interface is MM7. By default, a CDR will be logged for this event. It is up to the service provider to decide how to charge the VASP for this. The event triggered by this operation starts before the MM is delivered to a VASP and ends after it is successfully delivered to the VASP.

MM7 MM Delivery Acknowledgement occurs when a VAS Gateway sends an acknowledgement indicating that a message was successfully received. This is an HTTP response indicating that the VAS Gateway had processed the message and does not confirm that the message has arrived at its final destination. It generates an MM Delivery event. The billing record type is "MMSR-CDR". The message type is "Message-MM". The recipient interface is MM7. By default, a CDR will be logged for this event. This CDR can contain billing data returned by the VAS Gateway. It is up to the service provider to decide how to charge the VASP for this. The event will occur more than once if the "MM7 MM Delivery" trigger is also activated. The event is repeated when this operation occurs. See MM7 MM Delivery. If this event occurs more than once, the sequence number will be incremented by 1 for the event related to this operation. If not, the sequence number will be set to 0. The charge indicator will be set to "charge" if the operation was successful. The event triggered by this operation starts and ends after the MMSC receives an acknowledgement from the VAS gateway.

Auto DR Submission occurs at various points when an error occurs and a delivery report is to be sent to the originator. It generates a DR Submission event. The billing record type is "MMSO-CDR". The message type is "Delivery-Report". The originator interface is "Auto". By default, there is no charge since it's a system initiated delivery report. The event triggered by this operation starts and ends when an error occurs in the delivery of an MM.

MM1 DR Submission occurs when a user agent successfully retrieves an MM and allows a delivery report to be sent confirming the MM delivery. It generates a DR Submission event. The billing record type is "MMSO-CDR". The message type is "Delivery-Report". The originator interface is "MM1". By default, the originator of the delivery report will be charged. The event triggered by this operation starts and ends after the MMSC receives indication from the handset that a delivery report should be generated.

MM4 DR Submission occurs when an MMSC receives a delivery report from a remote MMSC, confirming delivery of an MM. It generates a Delivery Report Submission event. The billing record type is "MMSO-CDR". The message type is "Delivery-Report". The originator interface is "MM4". By default, a CDR will be logged for this event. It is up to the service provider to decide to charge the service provider of the trusted remote MMSC for this. The event triggered by this operation starts and ends after the MMSC receives indication from a remote MMS Relay that a delivery report should be generated.

MM1 DR Notification occurs when a delivery report is sent to a user agent. It generates a DR Notification event. The billing record type is "MMSR-CDR". The message type is "Delivery-Report". The recipient interface is "MM1". By default, the recipient is charged. The event triggered by this operation starts before a delivery report is sent to a handset and ends after the delivery report is sent.

MM4 DR Notification occurs when a delivery report is sent to a remote MMSC. It generates a DR Notification event. The billing record type is "MMSR-CDR". The message type is "Delivery-Report". The recipient interface is "MM4". By default, the recipient is charged if a delivery report is sent to a handset. If a delivery report is sent to another server, then a CDR will be logged for this event. It is then up to the service provider to decide how to charge for delivery of the report to the remote server. The event triggered by this operation starts before a delivery report is sent to another server and ends after the delivery report is sent.

MM7 DR Notification operation occurs when a delivery report is sent to a VASP. It generates a DR Notification event. The billing record type is "MMSR-CDR". The message type is "Delivery-Report". The recipient interface is "MM7". By default, the recipient is charged if a delivery report is sent to a handset. If a delivery report is sent to another server, then a CDR will be logged for this event. It is then up to the service provider to decide how to charge for delivery of the report to the VASP. The event triggered by this operation starts before a delivery report is sent to a VASP and ends after the delivery report is sent.

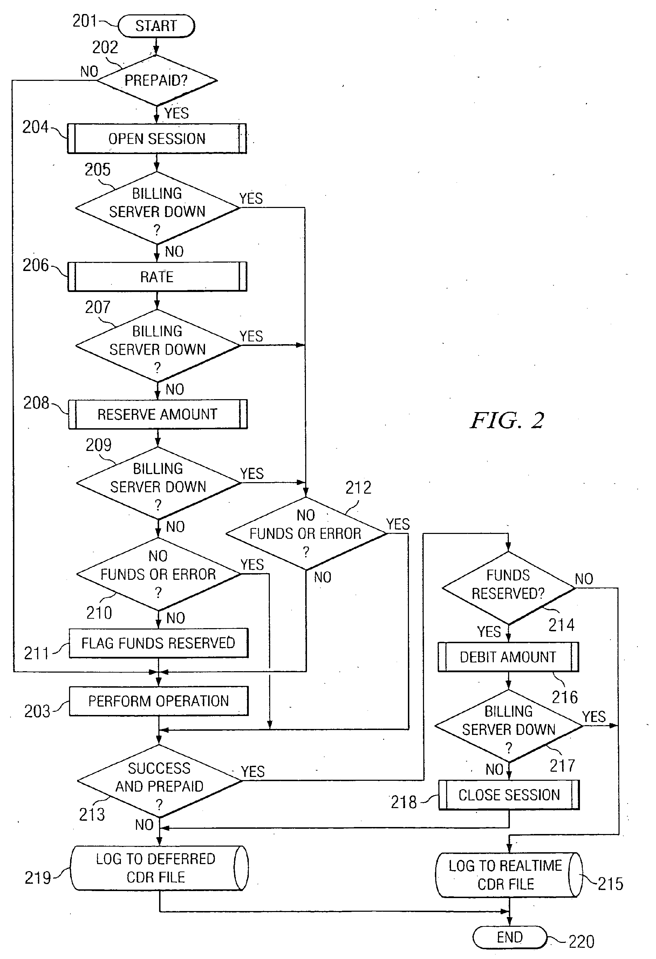

FIGURE 2 is a flowchart illustrating one embodiment of a method of operation of the present invention. When an application begins a billable operation, such as the submission or retrieval of a message, the method is started at 201. In 202, the method determines whether the subscriber account to be billed, which may be the originator's or the recipient's account, is a prepaid account. If the account is not prepaid, then the billable operation is performed in 203. If the account is prepaid, then a billing session is opened in 204. In 205 the billing server status is checked. If the billing server is up, the billable operation is rated in 206. Rating may be performed by an external rating engine or it may be determined by looking up the appropriate rate for the operation in a local file. After rating in 206, the billing server status is checked again in 207.

If the billing server is up, then a reserve amount is determined in 208. The reserve amount may be calculated by any predetermined formula, such as the rated amount determined in 206, a percentage of the rated amount, or the rated amount plus some other amount, such as a transaction fee amount. The billing server status is checked again in 209 and, if the billing server is still operating, the subscriber's account is checked for funds in 210. If funds are available in the account, then a flag is set in memory indicating funds were reserved in 211 and operation is performed in 203. If the billing server is down at any time in 205, 207 or 209, then the process checks for fund availability or other errors in 212. Since the billing server is down, the check in 212 cannot determine the current account balance, but it may check whether the account is invalid or canceled or it may check a list of accounts with low balances or some other backup information. Unless it is determined that there actually are no funds in the account, the operation is performed in 203.

Once the operation is performed, or if there are no funds available in the subscriber account, the success of the operation is checked in 213. If the operation was not successful or if the subscriber account was not prepaid, then the event is logged to a deferred CDR file in 219 and, the billing event ends in 220.

If the operation was successful and the subscriber has a prepaid account in 213, then 214 checks to determine if funds were previously reserved. If no funds were reserved, then the event is logged to a real-time CDR file in 215, and the event ends in 220. If funds have been reserved, then the amount to be debited is calculated in 216 and the status of the billing server is checked in 217. If the billing server is up, the session is closed in 218 and the event is logged to the deferred CDR file in 219 before ending in 220. If the billing server is down, the event is logged to the real-time CDR file in 215 and then ends in 220.

The exemplary process set forth in FIGURE 2 may be embodied as a software application that is run on a processor-based system, such as server. The billing extension module, real-time billing client library, and other applications and interfaces may similarly be embodied as software applications that are executable on a server or similar device.

It will be understood that the exemplary embodiments set forth herein do not limit the application of the present invention. Those of skill in the art will recognize that other embodiments of the invention may be readily used. The present invention provides a method of connecting an application to a separate billing module, such as a billing module in a network back-end. The application is allowed to operate with operate without reference to the specific requirements of the particular billing application that is in use. In one embodiment, the application notifies the billing module only that a requested event or service has started. The billing module then logs the event and bills the customer's account. In other embodiments, the application may also notify the billing module when the service or event has ended. The billing module may provide an authorization message to the application indicating that a requested service is approved or that sufficient funds are available.

In alternative embodiments, the billing module rates the requested service or event and provides advice of charge information to the application regarding the amount that the user will be charged for the service or event. The present invention may be used with both prepaid and post-paid billing applications. In some embodiments, service costs may be reserved against the subscriber account when the service is requested or the account may be checked for sufficient funds. These amounts may be charged to the account upon completion of the service. In other embodiments, the cost of a service may be charged to the user's account when the service is requested. If the service is not available, or if the service fails, the user's account may be later credited for the amount previously charged or the charges may be rolled back.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method of billing for mobile application services comprising:
receiving a request for a mobile application operation;
determining if the application operation is billable;
identifying a subscriber account to be billed, if the operation is billable;
notifying an external billing module to start a billing event;
performing the requested mobile application operation; and
notifying the external billing module to end billing event.

2. The method of claim 1 further comprising:
receiving authorization from the external billing module to execute the billable operation.

3. The method of claim 1 further comprising:
receiving a billing rate from the external billing module.

4. The method of claim 1 further comprising:
receiving advice of charge information from the external billing module.

5. The method of claim 1, wherein the subscriber account is a prepaid account, the method further comprising:
the billing module reserving an amount from the subscriber account for the operation; and
the billing module debiting the reserve amount from the subscriber account upon completions of the mobile application operation.

6. The method of claim 1, wherein the subscriber account is a postpaid account, the method further comprising:
the billing module reserving an amount from the subscriber account for the operation; and
the billing module debiting the reserve amount from the subscriber account upon completions of the mobile application operation.

7. The method of claim 1, wherein the subscriber account is a prepaid account, the method further comprising:
the billing module determining if the subscriber's prepaid account has sufficient funds to cover a billing rate for the mobile application operation.

8. The method of claim 1, wherein the subscriber account is a postpaid account, the method further comprising:
the billing module determining if the subscriber's postpaid account has sufficient funds to cover a billing rate for the mobile application operation.

9. The method of claim 1, wherein the subscriber account is a prepaid account, the method further comprising:
the billing module logging a completed mobile application operation in a charge detail record; and
later processing the charge detail record to bill the subscriber account for the operation.

10. The method of claim 1, wherein the subscriber account is a postpaid account, the method further comprising:
the billing module logging a completed mobile application operation in a charge detail record; and
later processing the charge detail record to bill the subscriber account for the operation.

11. The method of claim 1, wherein the subscriber account is a prepaid account, the method further comprising:
the billing module authorizing the mobile application operation;
the billing module receiving a message that the mobile application operation was not completed;
the billing module logging information about the mobile application operation, including error status, in a charge detail record; and
the billing module processing the charge detail record offline to credit the subscriber account for the mobile application operation.

12. The method of claim 1, wherein the subscriber account is a postpaid account, the method further comprising:
the billing module authorizing the mobile application operation;
the billing module receiving a message that the mobile application operation was not completed;
the billing module logging information about the mobile application operation, including error status, in a charge detail record; and
the billing module processing the charge detail record offline to credit the subscriber account for the mobile application operation.

13. The method of claim 1 wherein the billable operations are selected from the operations in group consisting of:
message submission;
message forward;
message notification;
message retrieval;
message delivery;
delivery report submission; and
delivery report notification.

14. A billing extension module coupled to a carrier's application to support billing operations, the billing extension module operable to perform billing services at the beginning of a billing event or at the end of a billing event or both, wherein the billing services include the services selected from the group consisting of:
logging charge detail records;
determining the cost of a billable operation;
checking for funds in an account;
reserving funds for an account;
debiting funds from an account; and
crediting funds to an account.

15. A system for providing mobile messaging billing services comprising:
a mobile application server;
a billing extension module application coupled to the mobile application server;
one or more remote billing servers; and
a real-time client billing library operable to provide communications between the billing extension module and the remote billing server.

16. , The system of claim 15 further comprising:
a charging data record store.

17. The system of claim 15 further comprising:
a remote rating engine.

18. The system of claim 15 further comprising:
a local rating engine.

19. A method for providing billing services to mobile applications that to not have embedded billing logic, the method comprising:
receiving a user request for mobile application service;
notifying a separate billing application of a start of the requested service;
notifying the separate billing application of an end of the requested service.

20. The method of claim 19 further comprising:
receiving, from the separate billing application, advice of charge information for the requested service.

21. The method of claim 20 further comprising:
providing advice of charge information to a user for approval to proceed with requested service.

22. The method of claim 19 further comprising:
receiving, from the separate billing application, authorization to perform the requested service.

23. The method of claim 19 further comprising:
creating a charge record for the requested service at the separate billing application; and
processing the charge record to bill a user's account for the requested service.

24. The method of claim 19 further comprising:
rating the requested service at the separate billing application.

25. A method for providing billing services for mobile applications comprising:
creating billing records from billing-related information that is collected from mobile messages;
sending the billing records to a billing application that is coupled to the messaging application;
converting billing record data into data structures;
converting the data structures into requests for a billing server;
sending the requests to the billing server; and
receiving responses to the requests from the billing server.

26. The method of claim 25 wherein the creating step is performed by a mobile messaging relay.

27. The method of claim 25 wherein the requests for the billing server are SOAP-formatted requests that can be sent over HTTP.

28. The method of claim 25 wherein the requests for the billing server are rate generation requests.

29. The method of claim 25 further comprising:
determining if the billing records correspond to billable operations.

30. The method of claim 29 wherein the billable operations are selected from the operations in group consisting of:
message submission;
message forward;
message notification;
message retrieval;
message delivery;
delivery report submission; and
delivery report notification.

31. The method of claim 25 further comprising:
calculating an amount to be reserved from a prepaid account until an operation is successfully performed.

32. The method of claim 31 further comprising:
logging events to a charge data record when the billing server is unavailable;
performing a billable operation for a subscriber; and
billing the subscriber's a prepaid account when the billing server becomes available.
